# EUROPEAN PATENT SPECIFICATION

(11) **EP 2 520 448 B1**
(45) Date of publication and mention of the grant of the patent: **02.04.2014**
(21) Application number: 12163535.3
(22) Date of filing: 10.04.2012
(51) Int. Cl.: B60G 7/02, B60G 3/20

(54) **Vehicle and wheel suspension assembly**
Fahrzeug und Radaufhängungszusammenbau
Ensemble de véhicule et suspension de roue

(30) Priority: 04.05.2011 NL 2006717
(43) Date of publication of application: 07.11.2012
(73) Proprietor: Innomac B.V. - Freedom Motors, 5827 AP Vortum-Mullem (NL)
(72) Inventor: Van Baal, Bastiaan Lucas, 5851 AD Afferden (NL); Van Mullekom, Peter John, 5827 AP Vortum-Mullem (NL)
(74) Representative: Jilderda, Anne Ayolt

(56) References cited:
- WO-A1-99/30956
- DE-A1-102006 009 300
- FR-A1- 2 702 956
- US-A1- 2003 111 834
- US-A1- 2004 036 266
- US-B1- 6 382 647
- US-B1- 6 733 021

## Description

The present invention relates to a vehicle comprising a bodywork with a mobile chassis, which bodywork comprises a bottom with a loading floor which supports on at least a first wheel and an opposite second wheel, wherein the first wheel and the second wheel are suspended for movement independently of each other within respectively a first spring path and a second spring path under the influence of spring means provided for this purpose. In addition, the invention relates to a wheel suspension assembly for a vehicle.

This relates particularly to a vehicle which is supplied for instance as standard delivery van or passenger car with a loading space in the rear of the vehicle and which is adapted for the purpose of wheelchair transport for the disabled. It is important here that the person sitting in a wheelchair retains sufficient head room and can preferably be seated in the vehicle on a flat, non-inclining loading floor. With a view hereto an existing standard loading floor of the vehicle, with which the vehicle is fitted in the factory, must usually be lowered. This usually means that the original loading floor will be replaced by one that is lower.

Up until recently delivery vans, but also passenger cars, were normally supplied with a rigid rear axle over which a lowered loading floor could be arranged relatively easily. A drawback here however is a certain incline in the loading floor necessary to span a boarding level to a level above the rigid rear axle. This incline has to be negotiated by a person when entering the vehicle, and in some cases this will require no little effort.

Such a rigid rear axle in vans is however increasingly also being replaced by an independent rear wheel suspension, this with a view to travel comfort, as has long been the case for the same reason in passenger cars. An independent rear wheel suspension provides for a free spring path of both wheels independently of each other in order to thus be able to better compensate for local unevenness in a road surface. From a structural viewpoint this requires the placing of reaction arms which extend, for instance centrally between the rear wheels, pivotally from the bottom under the loading floor and which are connected at a free outer end to the wheels. This central placing of the reaction arms forms in practice an obstacle to lowering of the bottom with loading floor.

The present invention has for its object, among others, to provide a vehicle with an independent rear wheel suspension and a relatively low loading floor, in particular a loading floor below a level of a wheel axle.

In order to achieve the stated object a vehicle of the type described in the preamble is characterized according to the invention in that the loading floor rests on a beam part of a substantially U-shaped carrier body, this beam part extending between a pair of opposite legs of the carrier body and between both wheels, that the first wheel and the second wheel are both connected via at least one pivot arm construction to an adjacent upright leg of the pair of upright legs of the carrier body, that the relevant pivot arm construction is mounted at opposite outer ends for pivoting about a rotation axis directed at least substantially transversely of the beam part, and that each of the two upright legs is provided at a free outer end with attaching means for an at least tube-like carrier body of the bottom of the vehicle, said attaching means comprising a pair of mounting flanges between which is received an at least tube-like carrier body of the bottom of the vehicle.

The at least one pivot arm thus forms in structural terms a reaction arm which imparts stability to the associated wheel. Because the pivot arms extend outward from the upright legs of the U-shaped carrier body, there is space there between for a lowered position of the loading floor, in particular to below a level of the wheel axle, limited only by a desired ground clearance of the vehicle. The beam part of the carrier body provides here for sufficient transverse stability and strength of the whole.

The above described wheel suspension assembly is particularly suitable for being provided only at a later stage in a vehicle, at least partially instead of an original loading floor and wheel suspension. A vehicle can in this way be modified from its initial form and made suitable for transport therein of a passenger sitting in a wheelchair. It is highly advantageous here that such a modification can be performed relatively easily and quickly. With a view hereto the invention provides attaching means at the free outer end of both upright legs with which a durable and reliable connection can be realized relatively quickly and easily between a tube-like carrier body already present therein and the bottom of the vehicle. The original loading floor between the tube-like bodies can thus be removed, and the U-shaped carrier body with a new lowered loading floor thereon can be placed there between relatively easily while nevertheless retaining bodywork stiffness and strength.

It is noted that it is known per se from US patent application 2003/0111834 and US patent 6,733,021 to provide a vehicle with a subframe that incorporates an independent wheel suspension system. This known subframe comprises a basically U-shaped body having upright intermediate subframe segments to which the suspension system is mounted. This known subframe, however, does not comprise a pair of flanges that enclose a tube-like member of the vehicle to thereby connect the sub-assembly in a quick, durable and convenient manner to an existing vehicle.

A particular preferred embodiment of the vehicle is characterized according to the invention in that one of the pair of mounting flanges comprises a lateral part with at least one bore which registers with an original threaded hole in the bottom of the vehicle. This is particularly the original threaded hole through which a spring buffer of an original wheel spring was mounted. A further particular embodiment of the vehicle is therefore further characterized according to the invention in that the lateral part comprises a bore whose central axis at least substantially coincides with a central axis of an original threaded hole in the bottom for the purpose of mounting a spring buffer of a wheel spring.

Because the lateral part of the mounting flange and the original bottom both comprise a bore whose central axes at least substantially coincide, a fitting bolt or other fixation means can be arranged therethrough in order to fix the whole. An accurate positioning of the carrier body in the vehicle is thus achieved from which the other attachments, particularly to the wheels, can be performed correctly in relatively simple manner. The lateral part thus provides not only an effective mounting base against which the original spring buffer can once again be attached but, owing to the mutual registration with the original threaded hole, also enables a simple check for a correct positioning of the new construction in the existing part of the vehicle.

In a preferred embodiment the vehicle according to the invention is characterized in that the pivot arm construction comprises a first and a second pivot arm connected at different heights one above the other to the carrier body on the one side and to the associated wheel on the other. By thus giving the pivot arm construction a dual form the construction per pivot arm can remain relatively light, while a triangular bracing can moreover be realized with a further connecting arm of the wheel which thereby lies at an angle. This provides for a mutual rigidity and torsional stiffness of the thus formed arm assembly.

A particular embodiment of the vehicle has the feature according to the invention that the loading floor extends between opposite flanks, each mounted against one of the two upright legs of the carrier body, and that the loading floor together with the flanks at least partially form an integral loading platform. Once an original bottom part of the vehicle has been removed, such a loading platform can thus be arranged in its place, wherein the flanks span a realized loading floor height difference.

The loading platform and beam construction can be manufactured per se from various materials which provide for sufficient durability and strength of the respective part. A further particular embodiment of the vehicle according to the invention has in practice proven itself in this respect, this embodiment being characterized in that the loading platform at least partially comprises a plate part of a material taken from a group comprising preserved steel, stainless steel and optionally laminated plastic, and that the carrier body comprises preserved steel, in particular galvanized steel, more particularly zinc-plated steel.

The invention particularly provides a solution for modifying and converting an existing vehicle supplied standard as for instance a delivery vehicle or delivery van so that a wheelchair can for instance be placed upright therein with sufficient head room. With a view thereto the invention also relates to a conversion kit with which such a modification can be fully or at least largely carried out.

Such a conversion kit comprises according to the invention a wheel suspension assembly of the type as applied in the above specified vehicle according to the invention, comprising an at least substantially U-shaped carrier body with a pair of opposite legs between which a beam apart extends, wherein extending from each of the upright legs to a side remote from the beam part is a pivot arm construction which is connected thereto for pivoting about a pivot axis oriented at least substantially transversely of the beam part, wherein the pivot arm construction is provided at a free outer end with attaching means for attaching to a vehicle wheel. In a particular embodiment the wheel suspension assembly is characterized here in that a loading platform comprising a pair of opposite flanks and a loading floor extending therebetween is arranged inside the U-shaped carrier body.

The invention will now be further elucidated on the basis of an exemplary embodiment and an accompanying drawing. In the drawing:
- figure 1: is a first perspective view of a rear axle construction of an embodiment of a vehicle according to the invention;
- figure 2: is a second perspective view of the axle construction of figure 1;

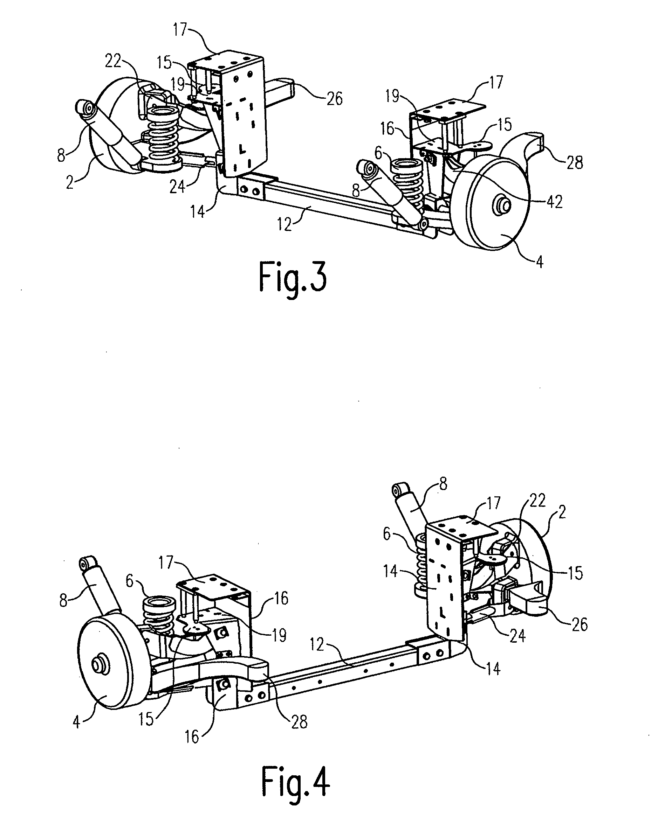

- figure 3: is a perspective rear view of an embodiment of a wheel suspension assembly according to the invention which is applied in the rear axle construction of figure 1;
- figure 4: is a perspective front view of the wheel suspension assembly of figure 3;

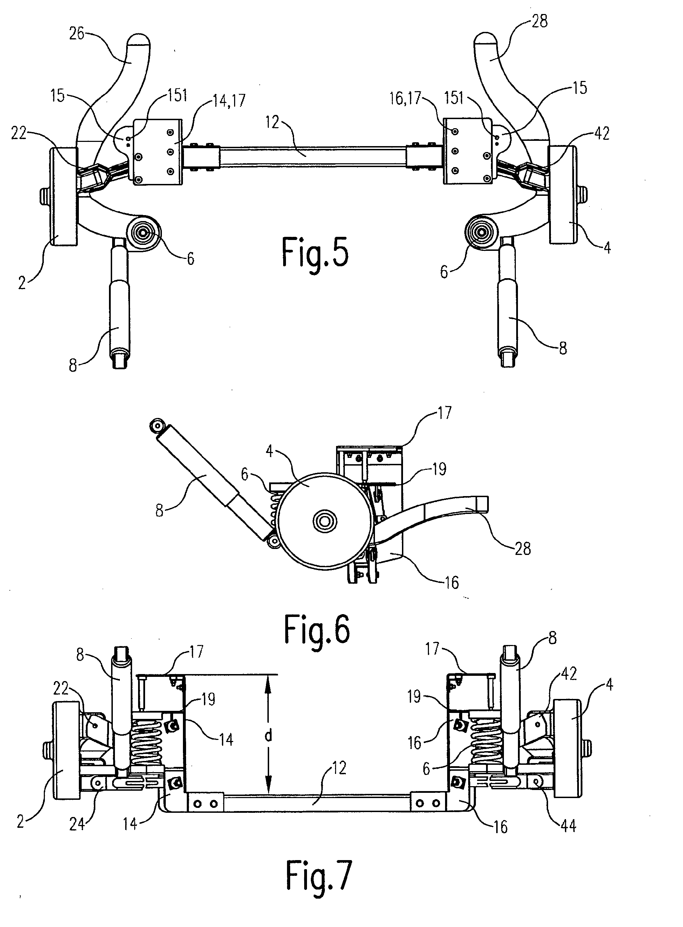

- figure 5: is a top view of the wheel suspension assembly of figure 3;
- figure 6: is a side view of these wheel suspension assembly of figure 3; and
- figure 7: is a rear view of the wheel suspension assembly of figure 3.

The figures are otherwise schematic and not always drawn to scale. For the sake of clarity some dimensions in particular may be exaggerated to greater or lesser extent. Corresponding parts are designated as far as possible in the figures with the same reference numeral.

The present invention relates particularly to the conversion of a passenger vehicle, delivery van or truck such as is supplied standard as make and model in order to make this suitable for disabled transport service. This entails, among other things, that sufficient head room must be provided, usually in the back of the vehicle, to enable transport of a disabled passenger sitting in a wheelchair. Instead of or in addition to raising a roof for this purpose, the present invention provides for a lowering of the bottom which leaves the original line of the vehicle unchanged.

With a view hereto an original loading floor in the rear of the vehicle has been removed in the present example and replaced with a wheel suspension assembly according to the invention. Use is made in this case of a standard delivery van of the make Fiat, Doblo van model. This vehicle has among its features a mobile chassis provided with independent rear wheel suspension with a view to an increased travel comfort compared to a similar van provided with a rigid rear axle. This means that in the present case the two rear wheels 2,4 are resiliently suspended independently of each other under the influence of spring means comprising for both wheels 2,4 a coil spring 6 in combination with a shock absorber 8. Both wheels are thus movable independently of each other in their own individual path, referred to as the spring path, which is damped by the spring means. It is otherwise noted that in order to show the wheels clearly in the figure only a brake drum is shown, but that in practice a rim with tyre will be mounted thereon. It will likewise be apparent that, apart from being applicable in the shown type of delivery van, the present invention can also be applied in other vans or vehicles with an independent rear wheel suspension of other model, make or manufacturer.

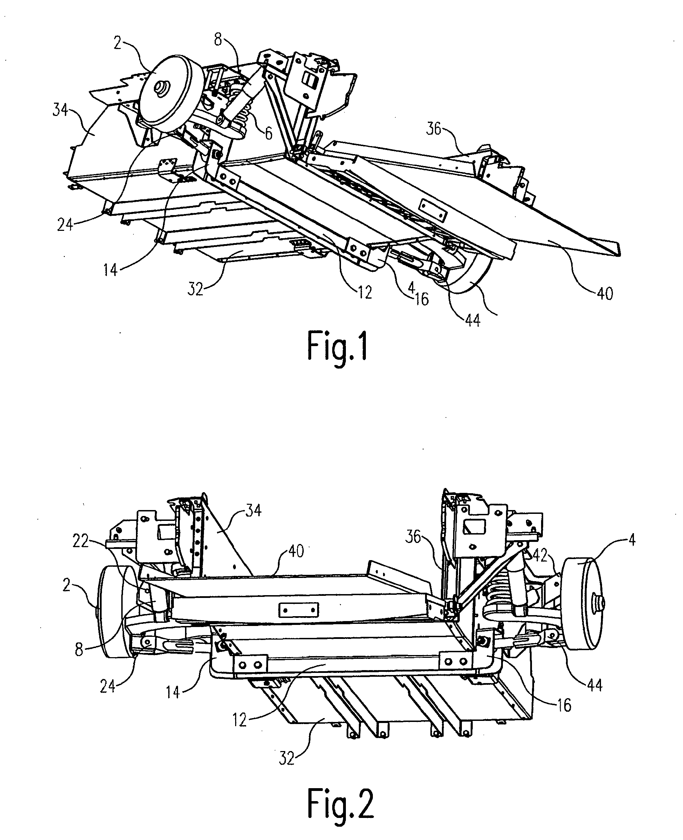

The original loading floor of the vehicle is removed in correct manner together with components possibly mounted against it, such as a fuel tank and an exhaust. In addition, the original wheel suspension is at least partially disconnected in order to remove a pair of original reaction arms. The rear axle construction shown in figure 1 is then realized. The conversion kit applied for this purpose comprises substantially a U-shaped carrier body with a beam part 12 between opposite legs 14,16 which are formed integrally therewith or are connected sufficiently firmly thereto, for instance by means of welding or, as in this example, bolts. Among other purposes, the carrier body serves to restore sufficient strength to the bodywork in lateral direction now that the original bottom has been interrupted at that position. For this purpose use is made for this carrier body in the present case of galvanized or otherwise preserved steel, although it is for instance possible instead to optionally have recourse to for instance stainless steel, aluminum or (glass) fibre-reinforced composite plastic material. In addition, the carrier body serves as support for a new loading floor and as new mounting base for wheel suspension.

In addition to the original coil spring 6 and shock absorber 8, this new wheel suspension comprises a pivot arm construction 22,24 and 42,44 respectively with which the associated wheel is connected for pivoting about a pivot axis directed transversely of beam part 12 to an adjacent side of the carrier body. In this case the pivot arm construction comprises for both wheels a pair of pivot arms, of which both an upper pivot arm 22,42 and a lower pivot arm 24,44 are coupled for pivoting about a pivot axis directed parallel to a longitudinal axis of the vehicle to the adjacent upright leg of the carrier body. By applying several pivot arms for the pivot arm construction the pivot arms can individually remain of relatively light construction and therefore weight. The pivot arms of a pair moreover form, together with a further pivoting suspension arm 26,28 of the associated wheel, a triangular bracing which imparts form stiffness and particularly torsional stiffness. The further suspension arm 26,28 is connected here for pivoting roughly in the longitudinal direction of the vehicle to the bottom of the vehicle and pivots about a pivot axis oriented roughly parallel to beam part 12.

On a free top side both upright legs 14,16 comprise mounting means, in this case in the form of a pair of mounting flanges 17,19, with which the carrier body can be mounted round a pair of opposite tubular profiles (not shown) of the vehicle. Serving for this purpose are a pair of bolts and bores provided beforehand for this purpose in flanges 17, 19. For a lateral registration of the carrier body in the vehicle a disc-like extension 15 is provided on the lower 19 of the two flanges. This lateral part of the relevant flange forms a cheek part corresponding to the position of the original mounting base in the vehicle bottom against which a rubber spring buffer of coil spring 6 was received. During assembly of the carrier body the carrier body with extensions 15 is placed thereover and placed in line therewith. A bore 151 provided for this purpose in extension 15 is precisely in register with a corresponding threaded hole in the original mounting base of the spring buffer. A fitting continuous nut and bolt connection for both bores thus not only provides for renewed fixation of the original spring buffer but also for a precise lateral positioning of the further whole, which will therefore also match the other original suspension components of the vehicle which have to be reattached.

The carrier body serves as carrier for a lowered loading floor. In the present example the loading floor 32 forms a part of an integral loading platform, for instance of plastic or stainless steel, which in addition comprises a pair of flanks 34,36 and a front upstand. These parts are sized for a close-fitting seamless assembly in the previously cut-away bottom of the vehicle. If desired, a high-quality finishing layer such as a covering can further be arranged thereover. In order to facilitate access to the loading floor for a wheelchair or the like, a tilting flap 40 is provided on a rear side which can be lowered or raised manually or hydraulically. Owing to the described conversion the loading floor lies a length / of about 30 centimetres lower than an original level thereof with which the vehicle is supplied as standard. In the described make and model of vehicle and in similar vehicles this already provides per se sufficient extra head room, so that a passenger sitting in a wheelchair can be received therein. An original roof height need not therefore be changed for this purpose.

Although the invention has been further elucidated on the basis of only a single exemplary embodiment, it will be apparent that the invention is by no means limited thereto. On the contrary, many variations and embodiments are still possible within the scope of the invention which will not require a great deal of thought on the part of the person with ordinary skill in the art. Use can thus be made, instead of the described vehicle, of other makes and models of delivery van, passenger cars or other types of vehicle. In some cases the dimensions of the carrier body and the loading platform will in that case have to be modified, but use can be made of essentially the same construction and conversion kit.

The described materials, though particularly practicable, can be substituted by other materials. Plastic plate parts in particular can also be applied instead of steel plate parts. For the bearing arms and profiles it is also possible to opt for instance for stainless steel, aluminium or other construction metal instead of preserved steel.

## Claims

1. Vehicle comprising a bodywork with a mobile chassis, which bodywork comprises a bottom with a loading floor (32) which supports on at least a first wheel and an opposite second wheel (2,4), wherein the first wheel and the second wheel are suspended for movement independently of each other within respectively a first spring path and a second spring path under the influence of spring means (6,8) provided for this purpose, **characterized in that** the loading floor rests on a beam part (12) of a substantially U-shaped carrier body, this beam part extending between a pair of opposite legs (14,16) of the carrier body and between both wheels, that the first wheel and the second wheel are both connected via at least one pivot arm construction (22,24,42,44) to an adjacent upright leg of the pair of upright legs of the carrier body, that the relevant pivot arm construction is mounted at opposite outer ends for pivoting about a rotation axis directed at least substantially transversely of the beam part, and that each of the two upright legs (14,16) is provided at a free outer end with attaching means for an at least tube-like carrier body of the bottom of the vehicle, said attaching means comprising a pair of mounting flanges (17,19) between which is received an at least tube-like carrier body of the bottom of the vehicle.

2. Vehicle as claimed in claim 1, **characterized in that** one of the pair of mounting flanges comprises a lateral part with at least one bore which registers with an original threaded hole in the bottom of the vehicle.

3. Vehicle as claimed in claim 2, **characterized in that** the lateral part comprises a bore (151) whose central axis at least substantially coincides with a central axis of an original threaded hole in the bottom for the purpose of mounting a spring buffer of a wheel spring.

4. Vehicle as claimed in one or more of the foregoing claims, **characterized in that** the pivot arm construction comprises a first and a second pivot arm connected at different heights to the carrier body on the one side and to the associated wheel on the other.

5. Vehicle as claimed in one or more of the foregoing claims, **characterized in that** the loading floor (32) extends between opposite flanks (34,36), each mounted against one of the two upright legs of the carrier body, and that the loading floor together with the flanks at least partially form an integral loading platform.

6. Vehicle as claimed in claim 5, **characterized in that** the loading platform at least partially comprises a plate part of a material taken from a group comprising preserved steel, stainless steel and optionally laminated plastic, and that the carrier body comprises preserved steel, in particular galvanized steel, more particularly zinc-plated steel.

7. Wheel suspension assembly, comprising an at least substantially U-shaped carrier body with a pair of opposite legs (14,16) between which a beam part (12) extends, wherein extending from each of the upright legs to a side remote from the beam part is a pivot arm construction (22,24,42,44) which is connected thereto for pivoting about a pivot axis oriented at least substantially transversely of the beam part, wherein the pivot arm construction is provided at a free outer end with attaching means for attaching to a vehicle wheel (2,4), and wherein each of the upright legs is provided at a free outer end with attaching means, comprising a pair of mounting flanges (17,19), for connecting to an at least tube-like carrier body of a bottom of a vehicle.

8. Wheel suspension assembly as claimed in claim 7, **characterized in that** a loading platform comprising a pair of opposite flanks and a loading floor extending there between is arranged inside the U-shaped carrier body.

## Patentansprüche

1. Fahrzeug, umfassend einen Körper mit einem mobilen Chassis, wobei der Körper einen Boden mit einem Ladeflur (32) aufweist, der abgestützt ist auf wenigstens einem ersten und einem gegenüberliegenden zweiten Rad (2, 4), die aufgehängt sind zwecks voneinander unabhängiger Bewegung innerhalb jeweils eines ersten Federweges und eines zweiten Federweges unter dem Einfluss einer hierfür vorgesehenen Federeinrichtung (6, 8), **dadurch gekennzeichnet, dass** der Ladeflur auf einem Trägerteil (12) eines im Wesentlichen U-förmigen Tragkörpers ruht, wobei sich das Trägerteil zwischen einem Paar einander gegenüberliegender Schenkel (14, 16) des Tragkörpers und zwischen beiden Rädern erstreckt, dass das erste und das zweite Rad über wenigstens eine Schwenkarmkonstruktion (22, 24, 42, 44) an einen benachbarten stehenden Schenkel des Paares stehender Schenkel des Tragkörpers angeschlossen sind, dass die jeweilige Schwenkarmkonstruktion an einander gegenüberliegenden Außenenden montiert ist, um um eine Drehachse zu schwenken, die wenigstens im Wesentlichen quer zum Trägerteil verläuft, und dass jeder der beiden aufrechtstehenden Schenkel (14,15) an einem freien Außenende vorgesehen ist, mit Befestigungsmitteln für einen wenigstens hülsenförmigen Tragkörper des Bodens des Fahrzeuges, wobei die Befestigungsmittel ein Paar Montageflansche (17, 19) umfassen, zwischen denen ein wenigstens hülsenförmiger Tragkörper des Bodens des Fahrzeuges aufgenommen ist.

2. Fahrzeug nach Anspruch 1, **dadurch gekennzeichnet, dass** einer des Paares von Montageflanschen ein seitliches Teil mit wenigstens einer Bohrung umfasst, die mit einer Gewindebohrung im Boden des Fahrzeuges fluchtet.

3. Fahrzeug nach Anspruch 2, **dadurch gekennzeichnet, dass** das Seitenteil eine Bohrung (151) umfasst, deren Mittelachse wenigstens im Wesentlichen mit einer Mittelachse einer Gewindebohrung im Boden fluchtet, um einen Federpuffer einer Radfeder zu montieren.

4. Fahrzeug nach einem oder mehreren der vorausgegangenen Ansprüche, **dadurch gekennzeichnet, dass** die Schwenkarmkonstruktion einen ersten und einen zweiten Schwenkarm umfasst, angeschlossen unter verschiedenen Höhen an den Fahrzeugkörper auf einer Seite sowie an ein zugeordnetes Fahrzeug auf der anderen Seite.

5. Fahrzeug nach einem oder mehreren der vorausgegangenen Ansprüche, **dadurch gekennzeichnet, dass** sich der Ladeflur (32) zwischen einander gegenüberliegenden Flanken (34, 36) erstreckt, deren jede an einen der aufrechtstehenden Schenkel des Tragkörpers montiert ist, und dass der Ladeflur zusammen mit den Flanken wenigstens teilweise eine integrale Ladeplattform bilden.

6. Fahrzeug nach Anspruch 5, **dadurch gekennzeichnet, dass** die Ladeplattform wenigstens teilweise ein Plattenteil aus einem Material umfasst, ausgewählt aus einer Gruppe umfassend Stahl, Edelstahl und wahlweise laminiertes Plastik, und das der Tragkörper Stahl, insbesondere galvanisierten Stahl, und ganz besonders korrosionsgeschützten Stahl umfasst.

7. Radaufhängungseinheit, umfassend einen wenigstens im Wesentlichen U-förmigen Tragkörper mit einem Paar einander gegenüberliegender Schenkel (14, 16), zwischen denen sich ein Trägerteil (12) erstreckt, wobei sich von jedem der aufrechtstehenden Schenkel zu einer vom Tragteil entfernten Seite eine Schwenkarmkonstruktion (22, 24, 42, 44) erstreckt, die hieran angeschlossen ist, um um eine Schwenkachse zu schwenken, die wenigstens im Wesentlichen quer zum Tragteil schwenkt, wobei die Schwenkarmkonstruktion an einem freien Außenende vorgesehen ist mit Befestigungsmitteln zum Befestigen an einem Fahrzeugrad (2, 4), und wobei jeder der aufrechtstehenden Schenkel an einem Außenende mittels Befestigungsmitteln vorgesehen ist, umfassend ein Paar Montageflansche (17, 19) zum Anschließen an einen wenigstens hülsenartigen Tragkörper eines Bodens des Fahrzeugs.

8. Radaufhängungseinrichtung gemäß Anspruch 7, **dadurch gekennzeichnet, dass** eine Ladeplattform ein Paar einander gegenüberliegender Flanken aufweist, und dass sich ein Ladeflur, der sich zwischen diesen erstreckt, innerhalb des U-förmigen Tragkörpers angeordnet ist.

## Revendications

1. Véhicule comprenant une caisse avec un châssis mobile, laquelle caisse comprend un fond avec un plancher de chargement (32) qui porte sur au moins une première roue et une seconde roue opposée (2, 4), dans lequel la première roue et la seconde roue sont suspendues pour se déplacer indépendamment l'une de l'autre respectivement dans une première course de débattement et une seconde course de débattement sous l'influence de moyens amortisseurs (6, 8) prévus à cette fin, **caractérisé en ce que** le plancher de chargement repose sur une partie formant poutre (12) d'un corps porteur sensiblement en forme de U, cette partie formant poutre s'étendant entre un couple de montants opposés (14, 16) du corps porteur et entre les deux roues, **en ce que** la première roue et la seconde roue sont toutes les deux reliées par au moins une structure de bras de pivot (22, 24, 42, 44) à un montant vertical adjacent du couple de montants verticaux du corps porteur, **en ce que** la structure de bras de pivot appropriée est montée au niveau d'extrémités extérieures opposées pour pivoter autour d'un axe de rotation dirigé au moins sensiblement transversalement à la partie formant poutre, et **en ce que** chacun des deux montants verticaux (14, 16) est muni, au niveau d'une extrémité extérieure libre, d'un moyen de fixation pour au moins un corps porteur en forme de tube du fond du véhicule, ledit moyen de fixation comprenant un couple de brides de montage (17, 19) entre lesquelles est reçu au moins un corps porteur en forme de tube du fond du véhicule.

2. Véhicule selon la revendication 1, **caractérisé en ce qu'**une bride du couple de brides de montage comprend une partie latérale avec au moins un alésage qui correspond à un trou fileté d'origine dans le fond du véhicule.

3. Véhicule selon la revendication 2, **caractérisé en ce que** la partie latérale comprend un alésage (151) dont l'axe central coïncide au moins sensiblement avec un axe central d'un trou fileté d'origine dans le fond dans le but de monter un amortisseur à ressort d'un amortisseur de roue.

4. Véhicule selon une ou plusieurs des revendications précédentes, **caractérisé en ce que** la structure de bras de pivot comprend un premier et un second bras de pivot reliés à des hauteurs différentes au corps porteur d'un côté et à la roue associée de l'autre côté.

5. Véhicule selon une ou plusieurs des revendications précédentes, **caractérisé en ce que** le plancher de chargement (32) s'étend entre des flancs opposés (34, 36), chacun monté contre un des deux montants verticaux du corps porteur, et **en ce que** le plancher de chargement en même temps que les flancs forment au moins partiellement une plate-forme de chargement d'un seul tenant.

6. Véhicule selon la revendication 5, **caractérisé en ce que** la plate-forme de chargement comprend au moins partiellement une partie plate d'une matière prise à partir d'un groupe comprenant l'acier préservé, l'acier inoxydable et de manière facultative le plastique stratifié, et **en ce que** le corps porteur comprend de l'acier préservé, en particulier de l'acier galvanisé, plus particulièrement de l'acier plaqué au zinc.

7. Ensemble formant suspension de roue, comprenant au moins un corps porteur sensiblement en forme de U avec un couple de montants opposés (14, 16) entre lesquels une partie formant poutre (12) s'étend, dans lequel, s'étendant à partir de chacun des montants verticaux jusqu'à un côté distant de la partie formant poutre, il y a une structure de bras de pivot (22, 24, 42, 44) qui est reliée à celle-ci pour pivoter autour d'un axe de pivot orienté au moins sensiblement transversalement à la partie formant poutre, dans lequel la structure de bras de pivot est munie, au niveau d'une extrémité extérieure libre, de moyens de fixation pour fixation à une roue de véhicule (2, 4), et dans lequel chacun des montants verticaux est muni, au niveau d'une extrémité extérieure libre, de moyens de fixation, comprenant un couple de brides de montage (17, 19), pour connexion à au moins un corps porteur en forme de tube d'un fond d'un véhicule.

8. Ensemble formant suspension de roue selon la revendication 7, **caractérisé en ce qu'**une plate-forme de chargement, comprenant un couple de flancs opposés et un plancher de chargement s'étendant entre eux, est agencée à l'intérieur du corps porteur en forme de U.
